# EUROPEAN PATENT APPLICATION

(11) **EP 4 437 830 A1**
(43) Date of publication of application: **02.10.2024**
(21) Application number: 23166155.4
(22) Date of filing: 31.03.2023
(51) Int. Cl.: A01D 75/18, A01D 89/00

(54) **A METHOD OF CONTROLLING A LIFT ASSEMBLY FOR A GRASS PICKUP HEADER**

(71) Applicant: CNH Industrial Belgium N.V., 8210 Zedelgem (BE)
(72) Inventor: BEELAERT, Simon, 8210 Zedelgem (BE); BLANCKE, Jeffrey, 8210 Zedelgem (BE); WILLEMS, Pieter, 8210 Zedelgem (BE); VAN BELLEGHEM, Stijn, 8210 Zedelgem (BE)
(74) Representative: CNH Industrial IP Department

(57) **Abstract**

The present invention relates to a control system (80) for an agricultural harvester (20) comprising a crop inlet (21) with infeed rollers (22) for collecting crop (50) from a pickup assembly (10) connected to the harvester (20) and a lift assembly (70) for moving the pickup assembly (10) from an operational configuration to a non-operational configuration. The control system (80) comprises a detector (27) for detecting a foreign object (55) in the collected crop (50) and one or more controllers (82) configured to receive a signal from the detector (27) that is indicative of a foreign object (55) in the collected crop (50) while the pickup assembly (10) is in the operational configuration. The control system is configured to control the lift assembly (70) to raise the pickup assembly (10), away from the crop 50) on the ground, to the non-operational condition, based on the received signal.

## Description

### TECHNICAL FIELD

The present invention relates to a control system for an agricultural harvester. Aspects of the invention relate to a control system, to an agricultural harvester and to a method of operating an agricultural harvester.

### BACKGROUND

Certain agricultural machines, such as forage harvesters, forage wagons and balers, collect crop material that has been cut from the field. The component that gathers the crop material and feeds it further into the machine for processing is generally known as a pickup assembly, which is connectable to and usable with the forage harvester. A pickup assembly typically comprises a pickup unit, in the form of a pickup drum or reel rotatably mounted on a pickup assembly frame. The pickup drum has radially projecting tines arranged to collect the crop material and propel it upwards, past a guiding element, and into a feeding auger. The feeding auger moves the crop laterally towards a feed channel through which the crop material is conveyed to a crop inlet of the harvester. The crop is collected at the crop inlet by infeed rollers of the harvester for subsequent processing, which may involve baling, threshing, chopping, storing and/or depositing, for example.

European patent no. EP3082398 B1 discloses such an agricultural machine further equipped with a foreign object detection system, such as a metal detector, configured to detect foreign objects in the collected crop. In this context, foreign objects may typically include metal parts, wood, or rocks, amongst other objects that can prove dangerous for the agricultural implements or the cattle that would eventually consume the picked-up crop. Detectors are available for detecting such foreign objects in the crop flow and, upon detecting a foreign object, the machine is configured to bring the infeed rollers to a stop, along with the pickup drum and auger of the pickup assembly (and the harvester itself). This makes it possible to remove the foreign object before it reaches the cutter drum, or the blower, of the forage harvester, where it might cause extensive damage.

However, while the infeed rollers may be brought to a standstill rapidly (for example within 300 milliseconds of detection), the agricultural machine continues to drive forward, for example due to the momentum or slower reaction speed of the driver. As the machine continues to drive forward, the cut-down crop is pushed along with the machine since the crop intake has stopped, producing a crop build-up that bears against the pickup drum. The build-up of crop is prone to damaging the pickup assembly, for example by bending and deforming the pickup tines of the pickup drum, which impairs their subsequent ability to perform effectively.

It is an aim of the present invention to address one or more of the disadvantages associated with the prior art.

### SUMMARY OF THE INVENTION

According to an aspect of the invention there is provided a control system for an agricultural harvester comprising: a crop inlet for collecting crop from a pickup assembly connected to the harvester; and a lift assembly for moving the pickup assembly from an operational configuration, in which the pickup assembly is operable to pick up crop from the ground and to convey the picked-up crop to the crop inlet of the harvester, to a non-operational configuration. The control system comprises: a detector for detecting a foreign object in the collected crop; and one or more controllers configured to: receive a signal from the detector that is indicative of a foreign object in the collected crop while the pickup assembly is in the operational configuration; and control the lift assembly to raise the pickup assembly, away from the crop on the ground, to the non-operational configuration, in dependence on the received signal.

In this manner, when a foreign object is detected in the collected crop, the control system automatically controls the lift assembly to raise the pickup assembly to the non-operational configuration, above the crop on the ground, such that there is no possibility of a damaging build-up of crop being formed against the pickup assembly as the harvester continues to travel forward. The control system therefore reduces the risk of damage to the pickup assembly during harvesting operations, leading to fewer replacements, and lowering the operational costs of crop harvesting. For this purpose, the control system may control the lift assembly to raise the pickup assembly to the non-operational configuration immediately in response to receiving the signal from the detector and thus before the harvester itself has come to a complete stop.

Optionally, the detector is a metal detector for detecting metallic foreign objects. In other examples, the detector may be a vibration sensor for detecting other foreign objects in the collected crop.

In an example, the detector may be arranged at the crop inlet of the harvester. The closer the detected is arranged to the crop inlet of the harvester, the earlier the foreign object can be detected. In an example, the detector may be arranged inside the pickup assembly and connected to the one or more controllers.

In an example, the one or more controllers are further configured to stop conveying the crop to, or through, the crop inlet in dependence on the received signal. In an example, the harvester may further comprise a plurality of infeed rollers for collecting the crop at the crop inlet. the one or more controllers may, for example, be further configured to stop rotation of the infeed rollers in a collection direction in dependence on the received signal. In this manner, the infeed rollers can be controlled to prevent admission of the foreign object into one or more further implements of the agricultural harvester, such as a cutting drum, by stopping the conveyance of the crop through the crop inlet.

For example, the one or more controllers may be configured to stop rotation of the infeed rollers by operating a driver of the infeed rollers. In this respect, the control system may be operatively connected to the driver of the infeed rollers and operable to stop the infeed rollers.

The one or more controllers may be configured to raise the pickup assembly to the non-operational configuration at the same time, or prior to, stopping the rotation of the infeed rollers. In this manner, the control system can ensure that there is no build-up of crop bearing against any fragile implements of the pickup assembly, when the rotation of the infeed rollers is stopped. In other examples, one or more controllers may be configured to raise the pickup assembly to the non-operational configuration immediately after stopping rotation of the infeed rollers.

In an example, the control system may be connectable to the pickup assembly. The one or more controllers may be further configured to control the pickup assembly to stop conveying the picked-up crop toward the crop inlet of the harvester in dependence on the received signal.

For example, the pickup assembly may include: a reel with pickup tines operable to pick up crop from the ground during active rotation of the reel; and an auger operable to transport the picked-up crop to the crop inlet, wherein the infeed rollers collect the picked-up crop.

The control system may be configured to control the lift assembly to raise the reel of the pickup assembly out of contact with the crop on the ground in the non-operational configuration.

The pickup assembly may, for example, further includes a driver operable to rotate the reel in a pick-up direction and the auger in a collection direction for picking up and transporting the crop. Optionally, the one or more controllers may be configured to stop conveying the collected crop toward the crop inlet by controlling the driver to stop rotation of the reel in the pickup direction and/or the auger in the collection direction.

In an example, the lift assembly may be controlled to raise the pickup assembly, away from the crop on the ground, to the non-operational configuration by lifting and/or tilting the pickup assembly out of contact with the crop on the ground. For this purpose, the lift assembly may include one or more lift actuators and/or tilt actuators.

According to another aspect of the invention there is provided an agricultural harvester comprising: a crop inlet for collecting crop from a pickup assembly connected to the harvester; a lift assembly for moving the connected pickup assembly from an operational configuration, in which the pickup assembly is operable to pick up crop from the ground and to convey the picked-up crop to the crop inlet of the harvester, to a non-operational configuration; and a control system as described in a previous aspect of the invention.

According to a further aspect of the invention there is provided a harvesting system comprising an agricultural harvester, as described in a previous aspect of the invention, and a pickup assembly attached to the agricultural harvester.

The pickup assembly may, for example, comprise a pickup assembly frame, a reel carried by the pickup assembly frame and configured to pick up crop from the ground, a feeding auger configured to receive the crop from the reel and to convey the crop towards a crop inlet of the agricultural harvester,

According to yet another aspect of the invention there is provided a method of controlling an agricultural harvester while harvesting. The agricultural harvester comprises: a crop inlet for collecting crop from a pickup assembly connected to the harvester; and a lift assembly for moving the connected pickup assembly from an operational configuration, in which the pickup assembly is operable to pick up crop from the ground and to convey the picked-up crop to the crop inlet of the harvester, to a non-operational configuration. The method comprises the steps of: detecting a foreign object in the collected crop; and controlling the lift assembly to raise the pickup assembly to the non-operational configuration, away from the crop on the ground, in dependence on detecting the foreign object.

Optionally, the method further comprises the steps of: picking up the crop from the field by a reel of the pickup assembly with pick-up tines; transporting the picked-up crop by an auger of the pickup assembly to the crop inlet of the agricultural harvester; collecting the transported crop by infeed rollers of the agricultural harvester; and in dependence on detecting the foreign object, stopping one or more of: collecting the transported crop by the infeed rollers; picking up crop from the field by the reel; and/or transporting the pickup-crop by the auger to the crop inlet.

According to another aspect of the invention there is provided a non-transient, computer-readable storage medium storing instructions thereon that when executed by one or more processors cause the one or more processors to execute a method as described in a previous aspect of the invention.

Within the scope of this invention it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE DRAWINGS

Embodiments of the invention will now be described by way of example with reference to the accompanying drawings, in which:
Figure 1 schematically shows a perspective view of a forage harvester that may embody one or more of the inventions described herein, with a pickup assembly in an operational configuration;
Figure 2 shows a side view of the forage harvester, shown in Figure 1, with the pickup assembly in a non-operational configuration;
Figure 3 shows a cross-sectional view of the pickup assembly and parts of the forage harvester of Figure 1;
Figure 4 shows an exemplary method of controlling the forage harvester, shown in Figure 1, in accordance with an embodiment of the invention.

### DETAILED DESCRIPTION

Embodiments of the invention relate to systems and methods for controlling an agricultural harvester during harvesting operations.

The agricultural harvester is configured to collect crop material that has been cut from a field. For this purpose, a pickup assembly may be attached to the harvester as one of a selection of attachable headers. The pickup assembly may comprise a pickup unit, typically in the form of a pickup drum, or reel, rotatably mounted on a frame of the pickup assembly. The reel has radially arranged projecting tines for collecting the crop material, and propelling the crop material past a guiding element, into a feeding auger of the pickup assembly. The feeding auger conveys the crop material laterally towards a feed channel, through which the crop is conveyed to a crop inlet of the harvester. At the crop inlet, the crop may be collected by one or more infeed rollers of the harvester for subsequent processing by downstream implements, which may involve baling, threshing, chopping, storing, and/or depositing, for example.

In order to protect the harvester from damage during a harvesting operation, the harvester also includes a control system having a foreign object detection system for detecting foreign objects in the collected crop. For example, the control system may include a metal detector for detecting metallic objects in the collected crop received at the crop inlet. If a foreign object is detected in the crop, the control system (or another controller of the harvester) may be configured to stop the feed into the harvester, for example by stopping rotation of the infeed rollers (in a collection direction), and thereby prevent admission of the object into the subsequent processing systems of the harvester.

The infeed rollers can therefore be stopped almost instantaneously upon receiving a signal that is indicative of a foreign object in the collected crop. However, the harvester may continue to drive forward through the cut-down crop material once the infeed rollers have been stopped. In the absence of any further control actions, the cut-down crop may therefore build up against the reel, leading to damage and deformation of the pickup tines.

Advantageously though, the harvester of the present invention also includes a lift assembly for raising and lowering the pickup assembly and the control system is configured to control the lift assembly to lift the pickup assembly, away from the ground, when foreign objects are detected in the collected crop.

During harvesting, the pickup assembly is therefore arranged in a lowered operational configuration and transfers collected crop, picked up from a field, to the crop inlet of the harvester. However, upon detecting a foreign object in the collected crop, the control system is configured to control the lifting assembly to lift or raise the pickup assembly, away from the ground, into a non-operational configuration, such that the pick-up assembly, and the pick-up reel, is clear from contact with the cut-down crop lying on the ground ahead of the harvester.

The infeed rollers and the implements of the pickup assembly (such as the reel and auger) can therefore be stopped to prevent admission of the foreign object into the harvester, without causing a crop build-up against the reel, thereby reducing the risk of damage to the harvester and the pickup assembly. The foreign object can subsequently be removed to avoid any further damage and, once removed, the pickup assembly can be lowered back to the operational configuration to continue the harvesting operation.

It is expected that the methods and systems of the present invention will therefore mitigate damage to the pickup assembly during harvesting and thereby reduce the need for replacement equipment, lowering the operational costs of crop harvesting.

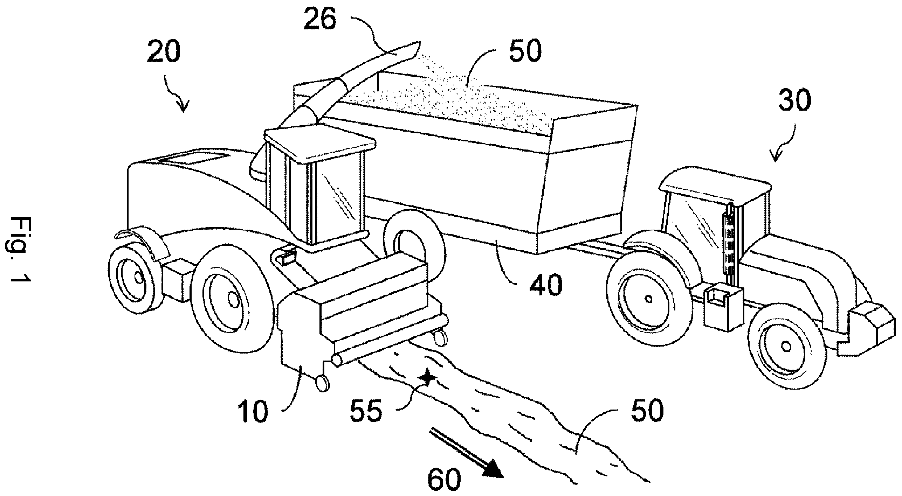

The methods and systems shall now be described in further detail with reference to Figures 1 to 4.

In the following, an exemplary agricultural harvester (also referred to as a 'harvester') is described in which the above described invention may be advantageously used. In addition to the invention claimed in the appended claims, further improvements may be implemented as described. It is noted that, while some features of these other improvements may appear essential in the context of those other improvements, it should not be concluded therefrom that such features are essential to the now claimed invention too. Similarly, it may be suggested that a feature essential for the currently claimed invention is merely optional in the context of the other possible improvements, which is not to be interpreted as an attempt to broaden the scope of protection beyond that which is claimed in the appended claims.

The directions up, down, forward, and rearward are herein defined relative to the general orientation and direction of an agricultural harvester, and the pickup assembly attached thereto, driving over a field and picking up crop, substantially as shown in Figure 1, which shall now be discussed in more detail.

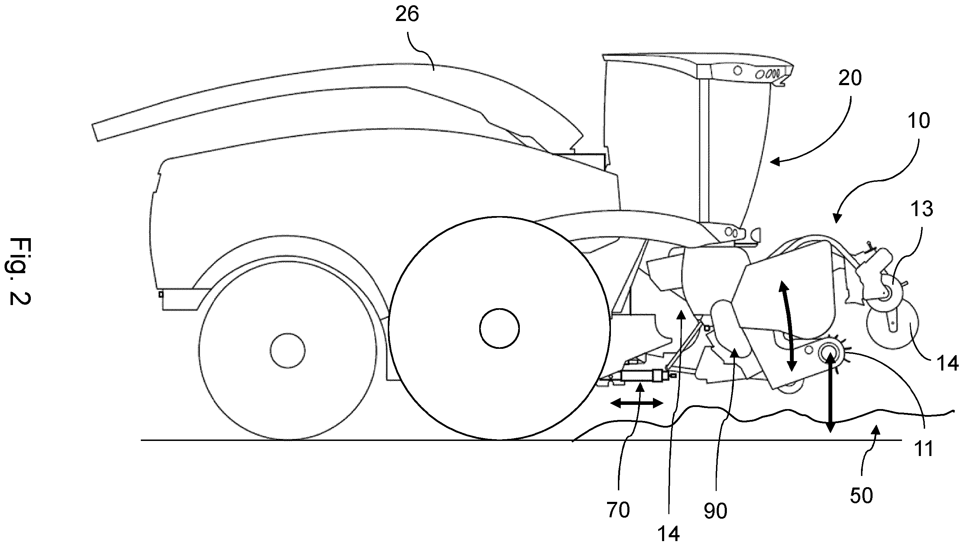

Figures 1 and 2 show an exemplary embodiment of an agricultural harvester 20, to which a pickup assembly 10 is attached. Together, the agricultural harvester 20 and the pickup assembly 10 may be considered to form a harvesting system. In this example, the agricultural harvester 20 is a forage harvester. However, the example is not intended to be limiting on the scope of the invention and, in other examples, the invention can also be applied to, for example, a baler, a loading wagon or any other agricultural harvester that picks up crop, e.g. cut down crop, from a field.

In the following examples, the crop to be picked up is grass, which has previously been deposited in a swath 50 on the field by a swath mower, as shown in Figures 1 and 2. However, the invention can also be applied to picking up other crop species, such as alfalfa for example. In general, the pick-up assembly 10 is configured to pick up the swath 50 during a harvesting operation and to transport the swath 50 to a crop inlet (not shown in Figures 1 and 2) of the forage harvester 20 for further processing. The subsequent processing performed by the harvester 20 may involve baling, threshing, chopping, storing and/or depositing, for example. As an example, Figure 1 shows a harvester 20 configured to cut the collected grass inside the harvester 20, which is subsequently discharged through a blower, via a spout 26 into an accompanying wagon 40. In this example, the wagon 40 is pulled by a tractor 30, but it shall be appreciated that a self-propelled dump truck may be used instead.

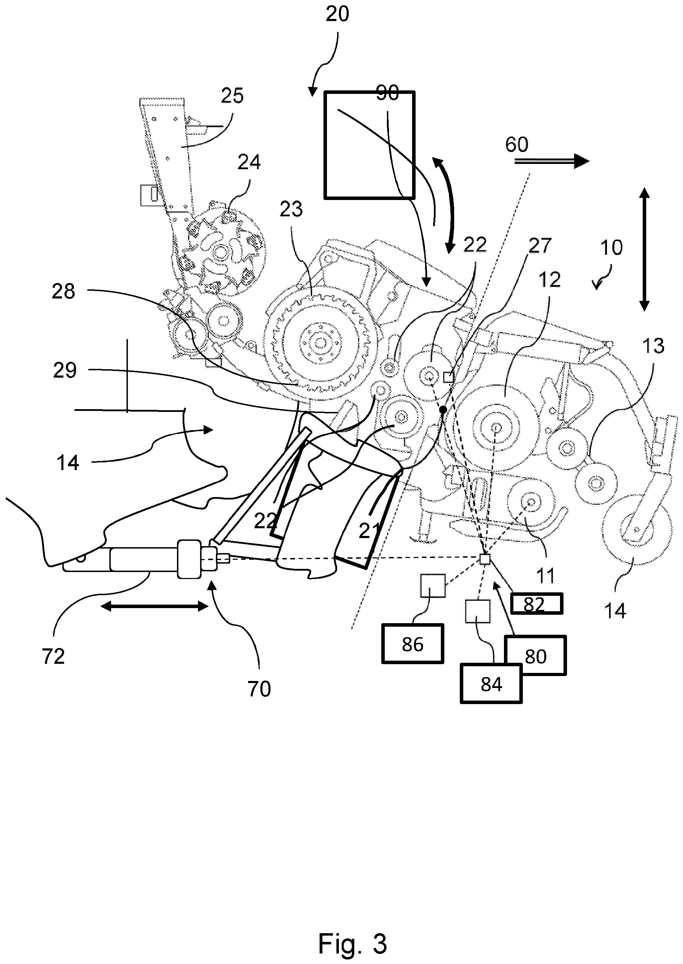

Figure 3 shows a cross section of the pick-up assembly 10 and parts of the forage harvester 20 in more detail. The pick-up assembly 10 comprises a pickup unit that includes a rake constituted by a pickup drum or reel 11 with pick-up fingers or tines for picking up the cut-down crop 50 from the field. The reel 11 is configured to rotate about a pickup axis that is transverse to the direction of movement of the harvester 20. Hence, when the forage harvester 20 drives forwards over the swath 50 (in the direction 60), the reel 11 is actively rotated in a pick-up direction (counter-clockwise in Figure 3), so that the fingers of the reel 11 take the crop in the swath 50 from the field. In particular, the rotating tines pick the crop material up from the ground and move it toward a crop material conveyor, which takes the form of a feeding auger 12 in this example. The auger 12 similarly rotates in a direction of collection to transport the picked-up crop material toward the crop inlet 21 of the harvester 20.

In examples, the reel 11 and the auger 12 may each be driven hydraulically or by any other suitable means, such as an electrical drive means for example. As shall be discussed in more detail, the rotation or drive of the reel 11 and/or the auger 12 may be controlled by a control system 80 of the harvester 20, for example via connection to a respective control unit 84 of the pickup assembly 10.

As shown in Figure 3, the pickup assembly 10 further includes one or more support wheels 14 that are configured to guide the pick-up assembly 10 in a stable manner and at a suitable height across the field whilst in an operational configuration (shown in Figure 1). In examples, the pick-up assembly may also include a windguard 13, as shown in Figure 3, that prevents crop 50 picked up by the reel 11 from being blown away before being guided via the auger 12 to the crop inlet 21 of the forage harvester 20. In examples, the windguard 13 can feature one or more additional rolls or reels to support the function of the reel 11. These additional rolls may rotate passively with the picked-up crop 50 or else may be actively driven along with the reel 11 and/or the auger 12.

The gathered crop 50 therefore enters the harvester 20 at the crop inlet 21, where the crop may be fed through a set of infeed rollers 22. In Figure 3, four infeed rollers 22 of the forage harvester 20 are shown, which pull the crop 50 supplied by the auger 12 through the crop inlet 21 into the forage harvester 20 for subsequent processing. In other examples, it shall be appreciated that the harvester 20 may include more, or fewer, infeed rollers 22 for this purpose. The infeed rollers 22 are arranged at a front end of the harvester 20 and may form part of an infeed assembly 90 for connection to the pickup assembly 10, as shall be discussed in more detail.

The infeed rollers 22 may be configured to guide the collected crop 50 in the form of a mat, for example with a given thickness, towards a cutting drum 23 arranged inside the harvester 20. The cutting drum 23 rotates about a rotation axis that is transverse to the direction of movement of the crops 50. Knives 28 are typically mounted on, and distributed along, the full circumference of the cutting drum 23, so that the knives 28 pass by a stationary shear bar 29 as the drum 23 rotates. In this manner, the collected crop is chopped into small pieces which are further transported from the cutting drum 23 to a collection area. In this example, the chopped material is then ejected by a blower 24 through an exit 25 to a rotatable spout 26. However, as mentioned previously, while the agricultural harvester 20 is illustrated and described as a forage harvester, this arrangement is not intended to be limiting on the scope of the invention. In some examples, the agricultural harvester 20 may take other suitable forms, such as a baler, e.g., a large square baler, a small square baler, or a round baler.

A problem exists, however, in that foreign objects 55 (as shown in Figure 1) (e.g. metal objects, stones or bits of wood) may be present in the swath 50, which can be picked up by the pickup assembly 10 and conveyed to the forage harvester 20. This may lead to serious damage in and around the forage harvester 20, and even to unsafe situations. For example, once inside the harvester 20, the foreign objects 55, or parts thereof, may be catapulted by the cutter drum 23 of the forage harvester 20 in a random direction. Also, when these foreign objects 55, or parts thereof, end up within the crop 50 in the wagon 40, they can constitute a safety risk for the cattle that will be fed the crop 50.

In order to prevent such foreign objects 55 from ending up in the cutter drum 23 of the forage harvester 20, the foreign objects 55 need to be detected and the crop feed through the crop inlet 22 needs to be stopped to prevent admission into the harvester 20.

Accordingly, the forage harvester 20 includes a foreign object detection system 27 for detecting foreign objects in the collected crop. Such foreign object detection systems 27 are well known in the art and are not described in detail here to avoid obscuring the invention. Nonetheless, to give an example, close to the crop inlet 21, for example inside the bottom and/or top infeed roller 22, at least one detector 27 may be provided for the detection of foreign objects 55 in the crop flow. The closer the detector 27 is located to the crop inlet 21, the earlier the infeed rollers 22 can be stopped and the greater the chance that the crop flow can be interrupted before the foreign object 55 disappears into the cutter drum 23. In this respect, metal detectors and stone detectors are commonly used in forage harvesters 20, but detectors for other types of crop-foreign objects 55 can also be used in combination with the present invention.

In order to stop the feed of crop through the crop inlet 21, the harvester 20 further includes a control system 80 (shown in Figure 3), featuring one or more controllers 82 coupled to the foreign object detection system 27 and the infeed rollers 22 (or a drive thereof).

The controller(s) 82 may be in the form of any suitable computing device, for instance one or more functional units or modules implemented on one or more computer processors. Such functional units may be provided by suitable software running on any suitable computing substrate using conventional or customer processors and memory. The one or more functional units may use a common computing substrate (for example, they may run on the same server) or separate substrates, or one or both may themselves be distributed between multiple computing devices. A computer memory may store instructions for performing the methods performed by the controller, and the processor(s) may execute the stored instructions to perform the method.

The control system 80 is configured to receive signals indicative of foreign objects 55 in the collected crop 50 and to execute a set of control actions in response. In this respect, the control system 80 is connected to the infeed rollers 22 (or a drive thereof) and, may be further connect to individual implements of the pickup assembly 10, such as the reel 11 and/or auger 12, or a drive thereof. In this manner, when a foreign object 55 is detected in the collected crop 50, the rotation of the infeed rollers 22, along with the auger 12 and the reel 11 of the pickup assembly 10, can be stopped to prevent admission into the harvester 20.

Accordingly, as soon as a foreign object 55 is detected, the control system 80 may control the infeed rollers 22, to stop automatically. For example, the infeed rollers 22 may be brought to a standstill within 300 milliseconds using the foreign objection detection systems that are currently available on the market. After the infeed rollers 22 have stopped, or simultaneously, the control system 80 may also control one or more of the auger 12, the reel 11 and/or the forage harvester 20 to stop, so that no more crop 50 is picked up and the harvester 20 is brought to a standstill.

Consequently, the crop 50 that includes the foreign object 55, is prevented from reaching the cutter drum 23 and damage to the cutter drum 23 can therefore be avoided.

However, while the pickup assembly 10 and the infeed rollers 22 can be stopped near instantaneously (e.g. within 300 milliseconds), the drive, and/or the driver, of the forage harvester 20 is slower to respond (e.g. due to the momentum of the harvester 20). Consequently, the forage harvester 20 continues to drive through the swath 50, which creates a build-up of grass in the pickup assembly 10. The accumulation or build-up of crop material 50 bears against the reel 11 and is prone to damaging the pickup tines as the harvester 20 progresses forwards. The present invention offers a solution to this problem in the form of a lift system 70, which is operable by the control system 80 to move the pickup assembly 10 from the lowered operational configuration to a raised non-operational configuration, clear of the swath 50, upon detecting the foreign object 55. This arrangement is described in more detail below.

As shown in Figure 3, in order to allow such movement, the pickup assembly 10 may be movably coupled to the harvester 20, or to a main frame of the harvester 20, for example by a pivotal connection. By way of a non-limiting example, an infeed assembly 90 of the harvester 20, which includes the infeed rollers 22, may extend forward of a main frame 14 of the harvester 20, as shown in Figures 2 and 3, and the infeed assembly 90 may be pivotally secured to the main frame 14 for producing generally vertical movement. The infeed assembly 90 may be configured to serve as a support structure for the pickup assembly 10 and may further include interfacing parts of a connection system (not shown) for connecting the harvester 20 to any one of a plurality of different headers (not shown) each suited to a different type of crop. In this respect, the pick-up assembly 10 is one such header that is particularly suited to the harvest of cut-down crop, and the connection system may include cooperating components on the harvester 20 and the pick-up assembly 10 for such attachment. For example, a rear end of the pickup assembly 10 may be coupled to the infeed assembly 90 of the harvester 20 (as shown in Figure 3), which is pivotable relative to the main frame 14, to allow upward and downward movement of the pickup assembly 10 relative to the ground.

To effect such movement, the harvester 20 also includes a lift system 70, which may be a hydraulic lift system, for example, though this is not intended to be limiting on the scope of the invention. The lift system 70 is configured to lift the pickup assembly 10 relative to the ground so as to effect movement between an operational configuration and a non-operational configuration. In the operational configuration (shown in Figure 1), the pickup assembly 10 is usable for crop harvesting and arranged at a suitable lowered height, such that the cut-down crop 50 can be picked up from the ground by the pickup tines of the reel 11 and delivered to the crop inlet 21 of the harvester 20. In the non-operational configuration (shown in Figure 2), the pickup assembly 10 is lifted away from, and out of contact with, the crop 50 on the ground. For example, the pickup assembly 10, or a front end thereof, may be lifted away from the ground at least to the extent that the reel 11, and the pickup tines thereof, are not able to contact the cut-down crop 50 on the ground.

As shall be appreciated by the skilled person, the lift assembly 70 may take various suitable forms for effecting such movement. However, to give an example, the lift system 70 may include one or more actuators 72 configured to adjust the height (i.e. vertical positioning) of the pickup assembly 10 and/or to adjust the inclination of a forward end of the pickup assembly 10 relative to a rear end of the pickup assembly 10 (which is attached to the harvester 20). The one or more actuators 72 may include a linear actuator, such as a height actuator, or a tilt actuator, for example.

For example, in the embodiment shown in the Figures, one or more linear actuator(s) 72 are coupled between the infeed assembly 90 and the main frame 14 of the harvester 20 such that the infeed assembly 90 can be raised, lowered, and/or pivoted relative to the main frame 14. In turn, such movement of the infeed assembly 90 raises and lowers the connected pickup assembly 10, or a forward end thereof, relative to the ground and thereby adjusts the pickup assembly 10 between the operational and non-operational configurations.

In general, the operation of the lift assembly 70, e.g. of the actuator(s) 72, is controlled by the harvester control system 80 (e.g., via an associated controller 86 or computing system). In particular, the control system 80 of the harvester 20 is configured to control the lift assembly 70 to adjust the vertical positioning and/or tilt angle of the pickup assembly 10 relative to the ground surface so as to move the pickup assembly 10 from the operational to the non-operational configuration in dependence on the foreign object detection system 27 detecting a foreign object 55 in the collected crop 50.

Accordingly, upon detecting a foreign object 55 in the collected crop 50, the control system 80 executes control actions to stop the flow of crop to the crop inlet 21, for example by stopping the rotation of the infeed rollers 22, the auger 12, and/or the reel 11. Simultaneously, or prior thereto, the control system 80 further controls the lift system 70 to move the pickup assembly 10 into the non-operational configuration such that the pickup assembly 10 is lifted clear of the swath 50, as the harvester 20 continues forward.

In this manner, the pickup assembly 10 is protected from further damage and the harvester 20 can be brought to a standstill in due course to allow for removal of the foreign object 55. It shall be appreciated that the foreign object 55 may be removed according to various suitable methods, for example being removed manually or by reversing the direction of rotation of the infeed rollers 22, auger 12, and/or reel 11 to eject the foreign object 55 from the pickup assembly 10.

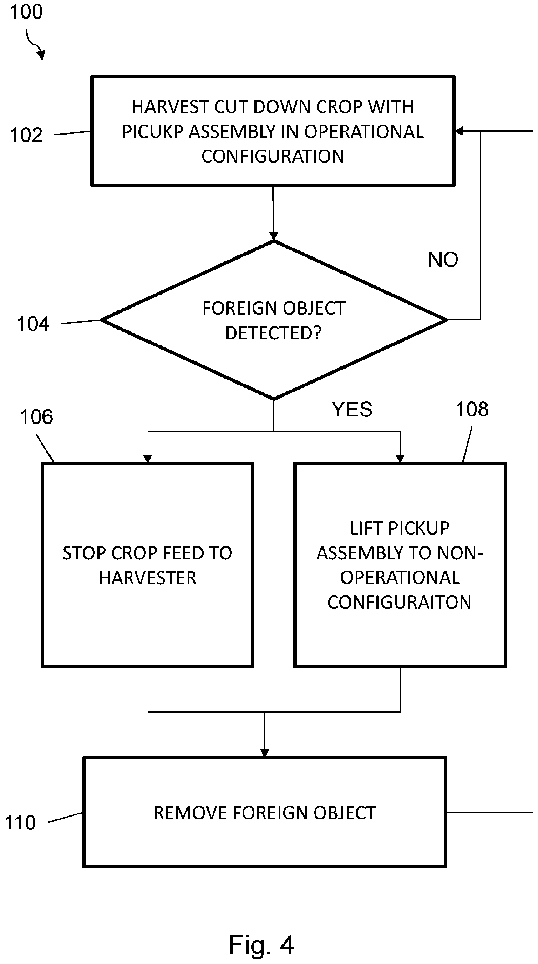

A method 100 of operating the agricultural harvester 20 in accordance with an embodiment of the invention shall now be discussed with additional reference to Figure 4.

The method 100 may be implemented by one or more controllers 82 or other processing modules of the control system 80 associated with the harvester 20.

In step 102, the harvester 20 is operated to perform a harvesting operation and the pickup assembly 10 is therefore arranged in the lowered, operational, configuration as the harvester 20 is driven through the swath 50 of cut-down crop (as shown in Figure 1). In the operational configuration, the pickup assembly 10 picks up the cut down crop from the swath 50 and conveys the crop to the crop inlet 21 of the harvester 20, substantially as described previously. The infeed rollers 22 of the harvester 20 collect the crop from the crop inlet 21 and pass the collected crop onwards through the harvester 20 for subsequent processing, which may involve baling, threshing, chopping, storing and/or depositing, for example.

During such harvesting, the control system 80 operates the foreign object detection system 27 to monitor the collected crop and determine, in step 104, whether a foreign object 55 is present in the collected crop.

This continues throughout the harvesting operation until the harvester 20 encounters a foreign object 55 in the swath 50, which is picked up by the pickup assembly 10 and conveyed to the crop inlet 21.

Accordingly, in step 104, the foreign object detection system 27 detects the foreign object 55 in the collected crop, for example at the crop inlet 21 and transmits a signal to the control system 80 that is indicative of the detected foreign object 55.

In response to receiving the detection signal, the control system 80 may control the stoppage of the feed of crop into the harvester 20, in step 106, to prevent admission of the foreign object 55 into the harvester 20.and thereby to protect the harvester 20 from damage.

The control system 80 may therefore control the infeed rollers 22 to stop rotating in the collection direction, for example by controlling the application of a braking force or counter torque from one or more connected braking devices or drives. The control system 80 may additionally control the auger 12 and/or the reel 11 to stop rotating in the respective collection and pickup directions, for example by operating one or more drives of the pickup assembly 10.

In step 108, upon detecting the foreign object 55 in the collected crop, the control system 80 is configured to control the lift system 70 to move the pickup assembly 10 to the non-operational configuration (shown in Figure 2), to avoid crop build-up against the pickup assembly 10.

In particular, the control system 80 may send a control signal to the actuator(s) 72 of the lift system 70 to move the pickup assembly 10 to the non-operational configuration, clear from contact with the swath 50 of cut down crop on the ground.

The control system 80 may therefore control the lift system 70 to move the pickup assembly 10 to the non-operational configuration, in step 108, and to stop the feed of crop into the harvester 20, in step 106, at the same time or substantially the same time, in response to receiving the signal indicative of the detection of the foreign object 55 in the collected crop. For example, the lifting of the pickup assembly 10 may be executed prior to, or at least in conjunction with, the stopping of the crop feed, in order to mitigate potentially damaging crop build-up.

In examples, the agricultural harvester 20 may also be brought to a standstill (automatically or manually) in response to detecting the foreign object 55, in step 104. For example, the control system 80 may send a command to a corresponding drive of the harvester or the control system 80 may output an alert to a display of the cab, prompting the driver to remove the foreign object 55 by stopping the vehicle.

Accordingly, once the harvester 20 has been brought to a standstill, the crop feed has been stopped, and the pickup assembly 10 has been lifted to the non-operational configuration, the foreign object 55 can be removed from the collected crop, in step 110.

In order to remove the foreign object 55, one or more components of the pickup assembly 10, such as the reel 11 and/or the auger 12, may be released (i.e. allowed to rotate freely) such that an individual is able to reach into the pickup assembly 10 and manually remove the foreign object 55 from the collected crop. Alternatively or additionally, the harvester 20 may be operated to rotate one or more of the infeed rollers 22, the reel 11, and/or the auger 12 in a reverse direction to eject or assist with the removal of the foreign object 55 from the collected crop.

Once the foreign object 55 has been removed from the collected crop, the control system 80 may be configured to detect the absence of the foreign object 55 and to control the lift assembly 70 accordingly to lower the pickup assembly 10 back to the operational configuration. This may be performed automatically or in response to a command from the driver. For example, the control system 80 may provide a signal to a notification system (not shown) of the harvester 20 to indicate the removal of the foreign object 55 and to prompt the driver to resume the harvesting operation, for example by pressing a dedicated button or by selecting this activity by means of a graphic user interface.

In turn, the control system 80 may therefore control the resumption of the crop collection and feed into the harvester 20 by rotating the infeed rollers 22 in the collection direction, along with the auger 12 and the reel 11. With the foreign object 55 removed, the harvester 20 can therefore safely resume the harvesting operation.

In this manner, the invention provides for greater protection of the harvester 20 and its implements, in addition to improved safety, whilst causing minimal disruption to the harvesting operations.

Many modifications may be made to the described examples without departing from the scope of the appended claims.

## Claims

1. A control system (80) for an agricultural harvester (20), the harvester (20) comprising: a crop inlet (21) for collecting crop (50) from a pickup assembly (10) connected to the harvester (20); and a lift assembly (70) for moving the pickup assembly (10) from an operational configuration, in which the pickup assembly (10) is operable to pick up crop (50) from the ground and to convey the picked-up crop (50) to the crop inlet (21) of the harvester (20), to a non-operational configuration, the control system (80) comprising:
a detector (27) for detecting a foreign object (55) in the collected crop (50); and
one or more controllers (82) configured to: receive a signal from the detector (27) that is indicative of a foreign object (55) in the collected crop (50) while the pickup assembly (10) is in the operational configuration; and
control the lift assembly (70) to raise the pickup assembly (10), away from the crop (50) on the ground, to the non-operational configuration, in dependence on the received signal.

2. A control system (80) according to claim 1, wherein the detector (27) is a metal detector for detecting metallic foreign objects.

3. A control system (80) according to claim 1 or claim 2, wherein the detector (27) is arranged at the crop inlet (21) of the harvester (20).

4. A control system (80) according to any preceding claim, wherein the harvester (20) includes a plurality of infeed rollers (22) for collecting the crop (50) at the crop inlet (21); and wherein the one or more controllers (82) are further configured to stop rotation of the infeed rollers (22) in a collection direction in dependence on the received signal.

5. A control system (80) according to claim 4, wherein the one or more controllers (82) are configured to stop rotation of the infeed rollers (22) by operating a driver of the infeed rollers (22).

6. A control system (80) according to claim 4 or claim 5, wherein the one or more controllers (82) are configured to raise the pickup assembly (10) to the non-operational configuration at the same time, or prior to, stopping rotation of the infeed rollers (22).

7. A control system (80) according to any preceding claim, wherein the control system (80) is connectable to the pickup assembly (10) and the one or more controllers (82) are further configured to control the pickup assembly (10) to stop conveying the picked-up crop toward the crop inlet (21) of the harvester (20) in dependence on the received signal.

8. A control system (80) according to claim 7, wherein the pickup assembly (10) includes:
a reel (11) with pickup tines operable to pick up crop (50) from the ground during active rotation of the reel (11); and
an auger (12) operable to transport the picked-up crop (50) to the crop inlet (21), wherein the infeed rollers (22) collect the picked-up crop; and
the control system (80) is configured to control the lift assembly (70) to raise the reel (11) of the pickup assembly (10) out of contact with the crop (50) on the ground in the non-operational configuration.

9. A control system (80) according to claim 8, wherein the pickup assembly (10) further includes a driver operable to rotate the reel (11) in a pick-up direction and the auger (12) in a collection direction for picking up and transporting the crop (50); and
wherein the one or more controllers (82) are configured to stop conveying the collected crop (50) toward the crop inlet (21) by controlling the driver to stop rotation of the reel (11) in the pickup direction and/or the auger (12) in the collection direction.

10. A control system (80) according to any preceding claim, wherein the lift assembly (70) is controlled to raise the pickup assembly (10), away from the crop (50) on the ground, to the non-operational configuration by lifting and/or tilting the pickup assembly (10) out of contact with the crop (50) on the ground.

11. An agricultural harvester (20) comprising:
a crop inlet (21) for collecting crop (50) from a pickup assembly (10) connected to the harvester (20);
a lift assembly (70) for moving the connected pickup assembly (10) from an operational configuration, in which the pickup assembly (10) is operable to pick up crop (50) from the ground and to convey the picked-up crop (50) to the crop inlet (21) of the harvester (20), to a non-operational configuration; and
a control system (80) according to any preceding claim.

12. A harvesting system comprising an agricultural harvester (20) according to claim 11 and a pickup assembly (10) attached to the agricultural harvester (20).

13. A harvesting system according to claim 12, wherein the pickup assembly (10) comprises a pickup assembly frame, a reel (11) carried by the pickup assembly frame and configured to pick up crop (50) from the ground, a feeding auger (12) configured to receive the crop (50) from the reel (11) and to convey the crop (50) towards a crop inlet (21) of the agricultural harvester (20).

14. A method (100) of controlling an agricultural harvester (20) while harvesting, the agricultural harvester (20) comprising: a crop inlet (21) for collecting crop (50) from a pickup assembly (10) connected to the harvester (20); and a lift assembly (70) for moving the connected pickup assembly (10) from an operational configuration, in which the pickup assembly (10) is operable to pick up crop (50) from the ground and to convey the picked-up crop (50) to the crop inlet (21) of the harvester (20), to a non-operational configuration; the method comprising the steps of:
detecting a foreign object (55) in the collected crop (50); and
controlling the lift assembly (70) to raise the pickup assembly (10) to the non-operational configuration, away from the crop (50) on the ground, in dependence on detecting the foreign object (55).

15. A method (100) according to claim 14, further comprising the steps of:
picking up the crop (50) from the ground by a reel (11) of the pickup assembly (10) with pick-up tines;
transporting the picked-up crop (50) by an auger (12) of the pickup assembly (10) to the crop inlet (21) of the agricultural harvester (20);
collecting the transported crop (50) by infeed rollers (22) of the agricultural harvester (20); and
in dependence on detecting the foreign object (55), stopping one or more of:
collecting the transported crop (50) by the infeed rollers (22);
picking up crop (50) from the ground by the reel (11); and/or
transporting the picked-up crop (50) by the auger (12) to the crop inlet (21).
